# EUROPEAN PATENT APPLICATION

(11) **EP 3 809 774 A1**
(43) Date of publication of application: **21.04.2021**
(21) Application number: 18923188.9
(22) Date of filing: 18.06.2018
(51) Int. Cl.: H04W 72/04, H04W 28/16, H04W 72/12

(54) **USER TERMINAL**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/023160
(87) International publication number: WO 2019/244218

(57) **Abstract**

A user terminal according to an aspect of the present disclosure includes: a receiving section configured to receive a downlink shared channel transmitted from different transmission/reception points per a predetermined number of repetitions; and a control section for controlling reception of a downlink control channel for scheduling the downlink shared channel per the predetermined number of repetitions or a downlink control channel for scheduling all of the repetitions of the downlink shared channel.

## Description

### Technical Field

The present disclosure relates to a user terminal in a next-generation mobile communication system.

### Background Art

In the UMTS (Universal Mobile Telecommunications System) network, the specifications of long term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE are also under study (also referred to as, for example, "FRA (Future Radio Access)", "5G (5th generation mobile communication system)", "5G+ (plus)", "NR (New Radio)", "NX (New radio access)", "FX (Future generation radio access)", "LTE Rel. 14", or "LTE Rel. 15 or later versions" and so on).

The conventional LTE system (such as LTE Rel. 8-14) is such that a user equipment (UE) controls reception of a downlink shared channel (such as PDSCH: Physical Downlink Shared Channel) on the basis of downlink control information (DCI, which may be referred to as DL assignment or the like) transmitted via a downlink control channel (such as PDCCH: Physical Downlink Control Channel). Also, the user terminal controls transmission of the uplink shared channel (for example, physical uplink shared channel (PUSCH)) based on the DCI (also referred to as UL grant).

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

It has been discussed to configure future radio communication systems (such as NR, 5G, 5G+, or Rel.15 or later) such that the future radio communication systems will perform communication by using beam forming (BF). Thus, it has been discussed to configure a user terminal such that the user terminal will refer to information regarding quasi-co-location (QCL) of at least one of a predetermined channel or signal (channel/signal) (QCL information) and will control a receiving process of the channel/signal (for example, at least one of demapping, demodulation, or decoding) on the basis of the QCL information.

The QCL information of the predetermined channel/signal (for example, PDSCH, PDCCH, or the like) is also referred to as state (TCI state) of transmission configuration indication or transmission configuration indicator (TCI) of the channel/signal.

Meanwhile, it has been discussed to configure the aforementioned future radio communication systems such that downlink shared channels (for example, PDSCH) will be transmitted by repeated transmission (repetitions). Moreover, it has been discussed to configure the aforementioned future radio communication systems such that the downlink shared channels will be transmitted from different one of a plurality of transmission/reception points (TRP) per a predetermined number of repetitions (for example, per one repetition).

However, in case where the downlink shared channel will be transmitted from a different TRP per the predetermined number of repetitions, how to schedule the downlink shared channel will have to be considered. Moreover, there will be a possibility that the user terminal will fail to appropriately recognize the TCI state of a downlink control channel used for the scheduling of the downlink shared channel, thereby resulting in a failure in appropriately controlling the reception of the downlink control channel.

Therefore, one of objects of the present disclosure is to provide such a user terminal that is capable of appropriately control the reception of the downlink control channel used for scheduling the downlink shared channel in case where the downlink shared channel is transmitted from different TRPs by repeated transmission.

### Solution to Problem

A user terminal according to an aspect of the present disclosure includes: a receiving section configured to receive a downlink shared channel transmitted from different transmission/reception points per a predetermined number of repetitions; and a control section for controlling reception of a downlink control channel for scheduling the downlink shared channel per the predetermined number of repetitions or a downlink control channel for scheduling all of the repetitions of the downlink shared channel.

### Advantageous Effects of Invention

According to one aspect of the present disclosure, it becomes possible to appropriately control the reception of the downlink control channel used for scheduling the downlink shared channel in case where the downlink shared channel is transmitted from different TRPs by repeated transmission.

### Brief Description of Drawings

Figs. 1A and 1B are diagrams illustrating illustrative examples of repeated transmission of channel/signal by using a plurality of TRPs.
Fig. 2 is a diagram illustrating one example of PDCCH used for scheduling of PDSCH to be transmitted by repeated transmission from a plurality of TRPs according to a first aspect.
Figs. 3A to 3D are diagrams illustrating the other examples of PDCCH used for scheduling of PDSCH to be transmitted by repeated transmission from a plurality of TRPs.
Figs. 4A to 4C are diagrams illustrating illustrative examples of relationships between a plurality of PDCCHs transmitted from different TRPs and SS sets.
Fig. 5 is a diagram illustrating one example of PDCCH used for scheduling of PDSCH to be transmitted by repeated transmission from a plurality of TRPs according to a first aspect.
Figs. 6A and 6B are the other examples of PDCCH used for scheduling of PDSCH to be transmitted by repeated transmission from a plurality of TRPs according to a second aspect.
Figs. 7A and 7B are the other examples of PDCCH used for scheduling of PDSCH to be transmitted by repeated transmission from a plurality of TRPs according to a third aspect.
Fig. 8 is a diagram to show an example of a schematic configuration of a radio communication system according to the present embodiment.
Fig. 9 is a diagram to show an example of an overall configuration of a radio base station according to the present embodiment.
Fig. 10 is a diagram to show an example of a functional configuration of the radio base station according to the present embodiment.
Fig. 11 is a diagram to show an example of an overall configuration of a user terminal according to the present embodiment.
Fig. 12 is a diagram to show an example of a functional configuration of the user terminal according to the present embodiment.
Fig. 13 is a diagram to show an example of a hardware configuration of the radio base station and the user terminal according to the present embodiment.

### Description of Embodiments

It has been discussed to configure future radio communication systems (such as NR, 5G, 5G+, or Rel.15 or later) such that at least either a channel or a signal (channel/signal) will be transmitted by repeated transmission. More specifically, it has been discussed to configure the future radio communication systems such that the channel/signal will be transmitted by repeated transmission by using a plurality of transmission/reception points (TRPs).

Examples of the channel/signal include PDSCH, PDCCH, PUSCH, PUCCH, DL-RS, uplink reference signal (UL-RS), and the like, but the channel/signal is not limited to these.

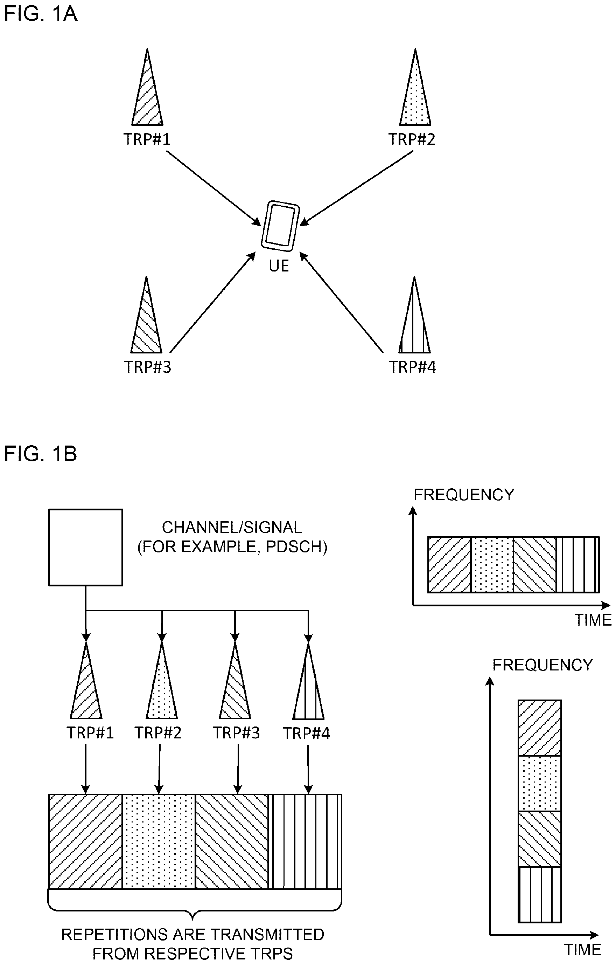

Figs. 1A and 1B are diagrams illustrating illustrative examples of repeated transmission of channel/signal by using a plurality of TRPs. For the illustrative purposes, Figs. 1A and 1B illustrate example of repeated transmission of PDSCH by using TRP#1 to TRP#4. It should be noted that the present invention is not limited to the example illustrated in Fig. 1A where the TRP#1 to TRP#4 have different geographic locations (TCI states). The TRP#1 to TRP#4 may be different antenna panels provided at the same transmission site. Moreover, the number of TRPs used for the repeated transmission is not limited to the number as illustrated in the drawings.

As illustrated in Fig. 1B, the repeated transmission may be such that the same PDSCH (or DL data) is copied by a plurality of TRPs and is transmitted as repetitions. Here, what is meant by "copying the DL data" may be copying at least one of an information bit sequence, a code block, a transport block, or a post-coding code word sequence, which constitutes the DL data.

As an alternative, what is meant by "copying the DL data" may not be copying a bit sequence as a whole, but may be at least part of code words generated from an information bit sequence or copying at least part of a demodulated symbol sequence. For example, a plurality of pieces of DL data copied may be such that RVs of the code words thus obtained by coding a certain information bit sequence may be identical with each other or different from each other among the plurality of pieces of DL data copied. As an alternative, a plurality of pieces of DL data may be demodulated symbol sequences obtained by demodulating such different or identical RVs. Each of the plurality of pieces of DL data is transmitted as PDSCH. The PDSCH may be such that at least either a time domain or a frequency domain is repeated in different resources.

For example, as illustrated in Fig. 1B, the PDSCH may be repeated in resources identical in frequency domain but sequential in time domain (for example, one or more slots). As an alternative, the PDSCH may be repeated in resources identical in time domain but sequential in frequency domain (for example, one or more resource blocks (RB) or an RB group (RBG) including one or more RBs). The repetitions may be transmitted to different TRPs.

Even though Fig. 1B illustrates such a case where each of the plurality of resources for different repetitions is sequential in time domain or frequency domain, but the plurality of resources may be non-sequential. Moreover, the plurality of resources may be such resources that are different from each other in terms of both of the time domains and frequency domains.

Moreover, even though Fig. 1B illustrates such a case where PDSCH is transmitted to different TRPs per repetition, but the present invention is not limited to this, and PDSCH may be transmitted to different TRPs per a predetermined number of repetitions (one or more repetitions).

It should be noted that the "TRP" may be replaced to read as different terms such as a network, a radio base station, an antenna device, an antenna panel, a serving cell, a cell, a component carrier (CC), a carrier, or the like. Moreover, a phase "TRPs are identical" for different transmission/reception signals or channels may be replaced to read as such a phase that TCI states, QCLs, or QCL relationships are identical between the different transmission/reception signals or channels or between reference signals of the different transmission/reception signals or channels. Moreover, a phase "TRPs are different" for different transmission/reception signals or channels may be replaced to read as such a phase that TCI states, QCLs, or QCL relationships are different between the different transmission/reception signals or channels or between reference signals of the different transmission/reception signals or channels.

### (QCL)

For the future radio communication system, it has been discussed that a user terminal will refer to information regarding quasi-co-location (QCL) of at least one of a predetermined channel or signal (channel/signal) (QCL information), and will control a receiving process of the channel/signal (for example, at least one of demapping, demodulation, or decoding) on the basis of the QCL information.

The QCL is herein an index showing the statistical properties of the channel/signal. In one example, in the case where a signal and another signal have QCL relationship, which means that at least one of Doppler shift, Doppler spread, average delay, delay spread, and spatial parameter (e.g., spatial reception parameter or spatial Rx parameter) is assumable to be the same between these different signals (QCL for at least one of these) of them.

Moreover, the spatial reception parameter can correspond to the reception beam of the user terminal (e.g., reception analog beam), and the beam can be specified on the basis of the spatial QCL. The QCL and least one element of the QCL is herein used interchangeably with sQCL (spatial QCL).

The QCL can be specified as a plurality of types (QCL types). In one example, four QCL types A to D of different parameters (or parameter sets) that are assumable to be identical can be provided, which parameters are shown below:
- QCL type A: Doppler shift, Doppler spread, average delay, and delay spread
- QCL type B: Doppler shift and Doppler spread
- QCL type C: Doppler shift and average delay
- QCL type D: spatial reception parameter

As to transmission configuration indication or transmission configuration indicator (TCI), a state thereof (TCI-state) may be so configured to indicate (include) QCL information of a predetermined channel/signal (for example, PDSCH, PDCCH, PUCCH, PUSCH, or the like).

The TCI state may be identified with a predetermined identifier (TCI-StateId), and may be configure to indicate (include) information (QCL information (QCL-Info)) regarding QCL between a channel/signal in question (or a reference signal for the channel (or an antenna port of the reference signal)) and another signal (for example, another downlink reference signal (DL-RS)).

The QCL information may include, for example, at least one of information regarding DL-RS having a QCL relationship with the channel/signal in question (DL-RS relating information), information indicating the type of the QCL (QCL type information), a carrier on which the DL-RS is to be provided (cell), or information regarding BWP.

The DL-RS related information can include a piece of information indicating at least one of DL-RS having a QCL relationship with the channel/signal in question and a resource of DL-RS. In one example, in the case where a plurality of reference signal sets (RS sets) is configured in the user terminal, the DL-RS related information can indicate at least one of DL-RS having QCL relationship with a channel (or a port for the channel) among RSs included in the RS set, a resource for the DL-RS, or the like.

Here, for example, DL-RS can be at least one of a synchronaization signal (SS), a physical broadcast channel (PBCH), a synchronization signal block (SSB), a mobility reference signal (MRS), a channel state information reference signal (CSI-RS), a CSI-RS for tracking, a beam-specific signal, or a signal constituted by expanding or changing such signal (e.g., a signal constituted by changing at least one of density and period).

The synchronization signal can be, in one example, at least one of a primary synchronaization signal (PSS) and a secondary synchronaization signal (SSS). The SSB is a signal block including a synchronization signal and a broadcast channel, and can be called an SS/PBCH block or the like.

### <TCI State for PDCCH>

The TCI state for PDCCH may include the QCL information regarding the QCL for PDCCH. More specifically, the TCI state may include QCL information regarding the QCL between a demodulation reference signal (DMRS) for PDCCH, (an antenna port for the DMRS (DMRS port) or a group of the DMRS port (DMRS port group)) and the DL-RS.

One or more TCI states may be configured for each control resource set (CORESET) for a user terminal. Moreover, in case where one or more TCI states are configured per CORESET, a single TCI states may be activated.

The user terminal may be configured such that, on the basis of the TCI state associated to (or activated for) a CORESET, the user terminal decides the QCL regarding PDCCH. More specifically, the user terminal may be configured such that the user terminal controls a receiving process (for example, decoding, demodulation, and/or the like) of the PDCCH on the assumption that the DMRS (DMRS port or DMRS port group) for the PDCCH has a Quasi-Co-located with the DL-RS corresponding to the TCI state.

At least either the configuring or activation of the one or more TCIs is carried out by higher layer signaling. The higher layer signaling may be, for example, any of RRC (Radio Resource Control) signaling, MAC (Medium Access Control) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

For example, the configuring of the one or more TCI states per CORESET may be carried out by an RRC control element "TCI-StatesPDCCH". Moreover, activation or deactivation of the TCI state thus configured may be controlled by MAC CE.

Further, a predetermined number (e.g., three or less) of CORESETs can be configured for each bandwidth part (BWP) configured in the user terminal in the serving cell.

Here, the BWP is a partial frequency band configured in a carrier (also referred to as a cell, a serving cell, a component carrier (CC), etc.), which is also called a partial frequency band or the like. The BWP may include a BWP (UL BWP, uplink BWP) for an uplink (UL) and a BWP (DL BWP, downlink BWP) for a downlink (DL). Each BWP to which the above-mentioned predetermined number of CORESETs is given can be a DL BWP.

Moreover, a CORESET may be associated with a search space including one or more PDCCH candidates. One or more search spaces may be associated with each CORESET. The user terminal may be configured to monitor the search spaces in order to detect PDCCH (DCI).

The PDCCH candidate is a resource unit to which one PDCCH is mapped, and for example the PDCCH candidate may include as many control channel elements (CCEs) as required for an aggregation level. The search space may include as many PDCCH candidates as required for the aggregation level.

Moreover, the terms "monitoring of CORESET", "monitoring of search space (or SS set)", "monitoring of PDCCH candidate (or more than one set of PDCCH candidate (PDCCH candidate set)", "monitoring of downlink control channel (e.g., PDCCH)", and "monitoring of downlink control information (DCI)" are herein used interchangeably with each other. In addition, the term "monitoring" is used interchangeably with "at least one of blind decoding and blind detection".

### <TCI State for PDSCH>

The TCI state for PDSCH may include the QCL information regarding the QCL for PDSCH. More specifically, the TCI state may include QCL information regarding the QCL between a DMRS for PDSCH or a port of the DMRS and the DL-RS.

The user terminal can be notified (configured) of M (M ≥ 1) TCI states for PDSCH (M pieces of QCL information for PDSCH) via higher layer signaling. Moreover, the number M of TCI states configured in the user terminal can be limited by at least one of the user terminal capability and the QCL type.

The DCI used for scheduling of PDSCH can include a predetermined field (e.g., also referred to as a field for TCI, a TCI field, a TCI state field, etc.) indicating the TCI state (QCL information for PDSCH). The DCI can be used for PDSCH scheduling of one cell, and can be referred to as, in one example, DL DCI, DL assignment, DCI format 1_0, DCI format 1_1, or the like.

The TCI field may include a predetermined number of bits (for example, 3 bits). Whether or not the TCI field is included in the DCI may be controlled by information provided from a base station to the UE. The information may be information (TCI-PresentInDCI) indicating whether the TCI field is present or absent in the DCI (present or absent). The TCI-PresentInDCI may be configured in the user terminal, for example, by a higher layer signaling (an information element (IE) of RRC).

In the case where the DCI includes an x-bit (e.g., x = 3) TCI field, the base station can configure previously up to 2^{x} (e.g., 8 for x = 3) types of TCI state to the user terminal by using higher layer signaling. The value of the TCI field in the DCI (TCI field value) can indicate one of TCI states that are configured previously via higher layer signaling.

In the case where more than eight types of TCI states are configured in the user terminal, eight or less types of TCI states can be activated (specified) using MAC CE. The value of the TCI field in the DCI can indicate one of the TCI states activated by MAC CE.

The user terminal may be configured such that, on the basis of the TCI state indicated by the TCI field value in the DCI, the user terminal decides the QCL regarding PDSCH. More specifically, the user terminal may be configured such that the user terminal controls a receiving process (for example, decoding, demodulation, and/or the like) of the PDSCH on the assumption that the DMRS (DMRS port or DMRS port group) for the PDSCH has a QCL relationship with the DL-RS corresponding to the TCI state provided in the DCI.

The user terminal may be configured such that, if TCI-PresentInDCI for a CORESET for scheduling PDSCH is active, the user terminal assumes that a TCI field is present (included) in the DL DCI of a PDCCH to be transmitted in the CORESET.

The user terminal may be configured such that, if TCI-PresentInDCI for a CORESET for scheduling PDSCH is inactive, or if PDSCH is scheduled by DCI format 1_0, the user terminal assumes, in deciding the antenna port QCL for the PDSCH, that the TCI state for the PDSCH is identical with a TCI state applied to the CORESET used for the transmission of the PDCCH. It should be noted that the words "antenna port (port)" in the present disclosure may be replaced to read as an antenna port group (port group).

However, as illustrated in Figs. 1A and 1B, in case where the PDSCH will be transmitted from a different TRP per the predetermined number of repetitions, how to schedule the PDSCH will have to be considered. Moreover, there will be a possibility that the user terminal will fail to appropriately recognize the TCI state of a PDCCH used for the scheduling of the PDSCH, thereby resulting in a failure in appropriately controlling the reception of the PDCCH.

Therefore, the present inventors studied how to carry out the scheduling of the PDSCH appropriately in case where repeated transmission of the PDSCH is carried out from different TRPs, thereby accomplishing the present invention. Moreover, the present inventors studied how to make it possible for the user terminal to appropriately control the reception of the PDCCH used for scheduling the PDSCH that will be transmitted by repeated transmission from different TRPs, thereby accomplishing the present invention.

Now, the present embodiment will be described below in detail with reference to the drawings. The following will describe an example where PDSCH is transmitted from different TRPs per repetition, but as described above, it is only required that the PDSCH be transmitted from different TRPs per a predetermined number of repetitions (one or more repetitions).

Moreover, the following will mainly describe an example where the repeated transmission of PDSCH is carried out with resources different in time domain. As described above, however, it is only required that the repeated transmission of the PDSCHs be transmitted with resources different in at least either the time domain or the frequency domain. Moreover, in the following, the term "PDCCH" and "DCI" are inter-exchangeable.

Moreover, in the following, what is meant by "transmitting a plurality of channels/signals from different TRPs" is identical with what is meant by the plurality of channels/signals having different TCI states (also referred to as QCL or QCL information). The user terminal may be so configured that, if the user terminal receives a plurality of channels/signals having different TCI states, the user terminal assumes the plurality of channels/signals will be transmitted from different TRPs. Therefore, what is meant by "receiving channels/signals transmitted from different transmission/reception points per a predetermined number of repetitions" is identical with what is meant by receiving channels/signals having different TCI states (also referred to as QCL or QCL information) per a predetermined number of repetitions.

### (First Aspect)

In a first aspect, a user terminal performs a receiving process (such as demapping, demodulation, decoding, and the like) on the assumption that PDCCH (DCI) for scheduling PDSCHs that will be transmitted from different TRPs (or with different TCI states) per repetition is transmitted from each one of the different TRPs thus changed over.

More specifically, in case where the PDSCHs are transmitted from different TRPs (or with different TCI states) per repetition, the repetitions associated with the different TRPs (or the repetitions associated with the different TCI states) may be scheduled by different PDCCHs (DCIs), respectively.

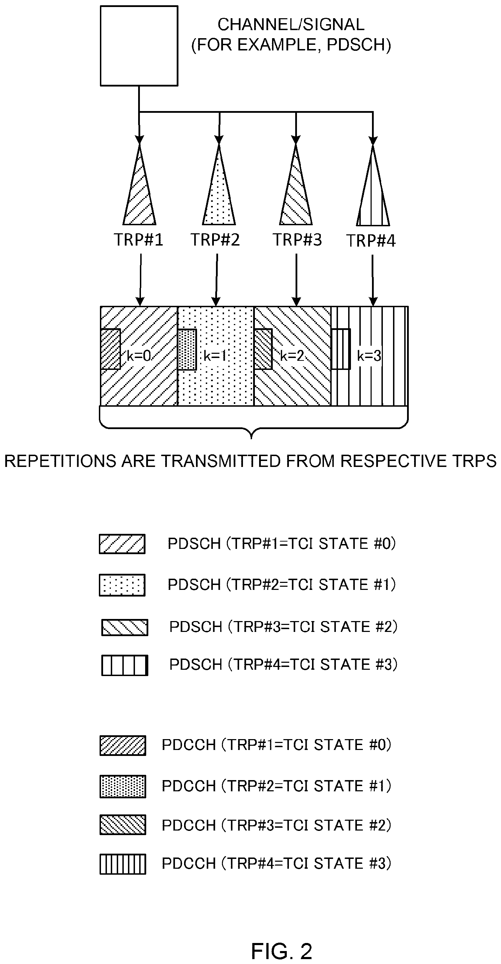

Fig. 2 is a diagram illustrating one example of PDCCH used for scheduling of PDSCH to be transmitted by repeated transmission from a plurality of TRPs according to a first aspect. Fig. 2 illustrates an example where repetition factor K of PDSCH is 4. Moreover, Fig. 2 assumes that the repetitions respectively distinguished with repetition indices k = 0, 1, 2, and 3 are to be transmitted from TRPs #1, #2, #3, and #4, respectively.

Moreover, Fig. 2 illustrates an illustrative example where the repetitions with the repetition indices k = 0, 1, 2, and 3 or the repetition indices k are associated with TCI states IDs #0, #1, #, 2, and #3 of PDSCHs. It should be noted that Fig. 2 is just for illustrative purposes and redundancy versions (RVs) or RV indices p may be associated with the TCI states. In the following, differences from Figs. 1A and 1B will be explained mainly.

As illustrated in Fig. 2, in case where the PDSCHs are transmitted from different TRPs per repetition, the PDCCH for scheduling the repetitions of the PDSCHs may be transmitted from the respective one of the TRPs. For example, in Fig. 2, the PDCCHs for scheduling the PDSCHs of the repetition indices k = 0, 1, 2, and 3 are transmitted from TRP #1, #2, #3, and #4, respectively.

Moreover, as illustrated in Fig. 2, the PDCCHs for scheduling the PDSCHs of the repetition indices k may be transmitted in such a way that a PDCCH shares the same TCI state with a PDSCH of the repetition index k corresponding to the PDCCH. For example, in Fig. 2, it may be so configured that the TCI state of a PDCCH for transmitting DCI for scheduling a PDSCH of the repetition index k = 0, 1, 2, or 3 may be identical with the TCI state of that PDSCH among #0, #1, #2, and #3.

The user terminal may be so configured that the user terminal decides QCL regarding the PDCCH on the basis of the TCI state indicated by the TCI state ID. More specifically, the user terminal may be so configured that the user terminal assumes that DMRS of the PDCCH has a QCL relationship with DL-RS (for example, at least one of SSB or CSI-RS) in the BWP indicated by the TCI state. More specifically, the user terminal may be so configured that, if the TCI states are different from each other, the user terminal assumes that PDCCHs will be transmitted from different TRPs. As described later, the TCI state may be associated with a CORESET or may be associated with a candidate resource (DL control channel candidate) in a search space (or a set including one or more search spaces (SS set)) associated with the CORESET.

Even though Fig. 2 illustrates such a configuration that the PDCCH for scheduling a PDSCH of the repetition index k is transmitted from the same TRP from which that PDSCH will be transmitted, with the same TCI state with which that PDSCH will be transmitted, this configuration is merely illustrative, and the present invention is not limited to this configuration. For example, the PDCCH for scheduling a PDSCH of the repetition index k may be transmitted from a TRP different from the TRP from which that PDSCH will be transmitted. Moreover, the PDCCH for scheduling a PDSCH of the repetition index k may be transmitted with a TCI state different from the TCI state with which that PDSCH will be transmitted,

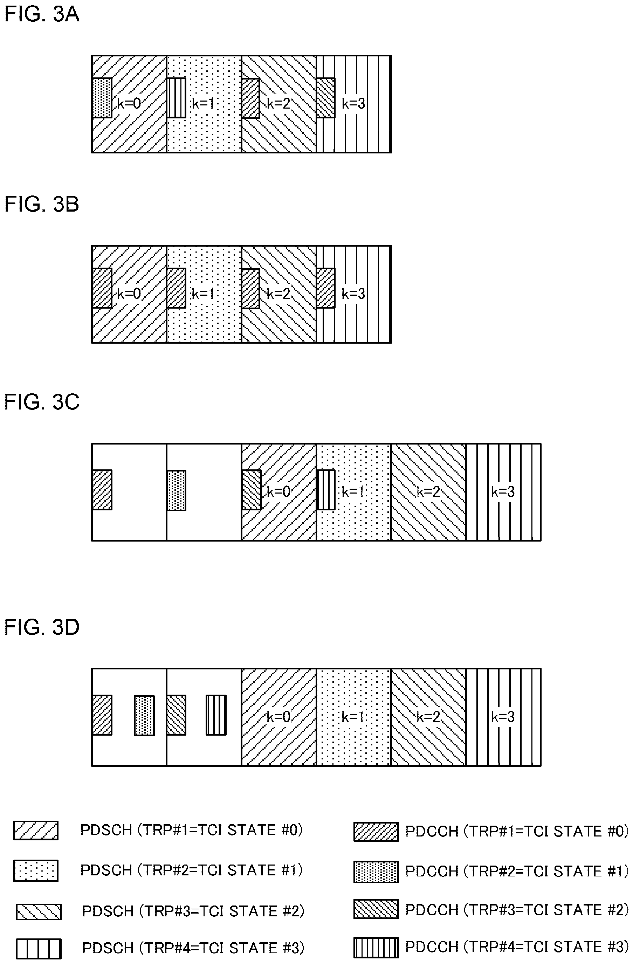

Figs. 3A to 3D are diagrams illustrating one example of PDCCH used for scheduling of PDSCH to be transmitted by repeated transmission from a plurality of TRPs according to a first aspect. Figs. 3A to 3D mainly explain differences from Fig. 2.

As illustrated in Fig. 3A, it may be configured such that a PDCCH for scheduling a PDSCH of repetition index k is transmitted from a TRP different from a TRP from which the PDSCH will be transmitted. Moreover, it may be configured such that the TCI state of the PDCH may be different from the TCI state with which the PDSCH will be transmitted.

For example, in Fig. 3A, the PDSCH of repetition index k = 0 is transmitted with the TCI state #0 from the TRP#1, whereas the PDCCH for scheduling this PDSCH is transmitted with the TCI state #1 from the TRP#2. Similarly, each of the PDCCHs respectively for scheduling the PDSCHs of repetition indices k = 1, 2, and 3 is transmitted using a TRP and a TCI state different from the TRP and the TCI state with which the PDSCH corresponding to that PDCCH is transmitted.

As an alternative, as illustrated in Fig. 3B, each of the PDCCHs for scheduling the PDSCH of repetition indices k may be transmitted from the same TRP with the same TCI state. For example, in Fig. 3B, the PDSCHs of different repetition indices k are transmitted respectively from different TRPs, whereas the PDCCHs for scheduling the respective PDSCHs different repetition indices k are transmitted from the same TRP (which is TRP#1 herein).

As illustrated in Figs. 3A and 3B, the PDCCHs for scheduling the respective PDSCHs of repetition indices k may be such that at least part of resources assigned to the PDSCHs and at least either the time domain or the frequency domain are mapped on the same resource.

As an alternative, as illustrated in Figs. 3C and 3D, the PDCCHs for scheduling the respective PDSCHs of the repetition indices k may be such that at least either the time domain or frequency domain is mapped on a resource different from the resource assigned to that PDSCH.

For example, as illustrated in Fig. 3C, the PDCCHs for scheduling the respective PDSCHs of the repetition indices k may be such that a PDCCH is mapped on a time domain resource (which is a slot herein) prior to a time domain resource assigned to that PDSCH, by a predetermined time (for example, 2 slots).

Moreover, as illustrated in Fig. 3D, a plurality of PDCCHs for scheduling the respective PDSCHs of the repetition indices k = 0 to 3 may be such that all of PDCCHs are mapped in a time domain resource(s) (which are slot(s) herein) (which are two slots herein) prior to the time domain resources assigned to the plurality of PDSCHs.

As described above, the user terminal may be so configured to control the reception of the PDCCH for scheduling the PDSCHs on the basis on a TCI state that is identical with or different from that of the PDSCHs that are transmitted in that round of the predetermined number of repetitions. More specifically, the user terminal may be so configured that, if the TCI state is identical with that of the PDSCH, the user terminal assumes that the PDCCH will be transmitted from the same TRP from which the PDSCHs are transmitted. On the other hand, the user terminal assumes that if the TCI state is different from that of the PDSCH, the PDCCH will be transmitted from a TRP different from that of the PDSCH.

### <Relationship between PDCCH and SS set>

The following will explain a relationship between the PDCCHs for scheduling the respective PDSCHs of the repetition indices k and search spaces (or a set including one or more search spaces (SS set)).

It may be so configured that, for the user terminal, one or more CORESETs and one or more search spaces (or SS sets) are configured. The each of one or more search spaces (or SS sets) may be associated with one CORESET.

Moreover, as described above, each CORESET configured for the user terminal is associated with one or more TCI states. If a CORESET is associated with a plurality of TCI states, one of the plurality of the TCI states may be activated with MAC CE.

In the first aspect, the plurality of PDCCHs for scheduling the PDSCHs of different repetition indices k may be associated respectively with different search spaces (or SS sets) or may be associated with the same search space (or SS set).

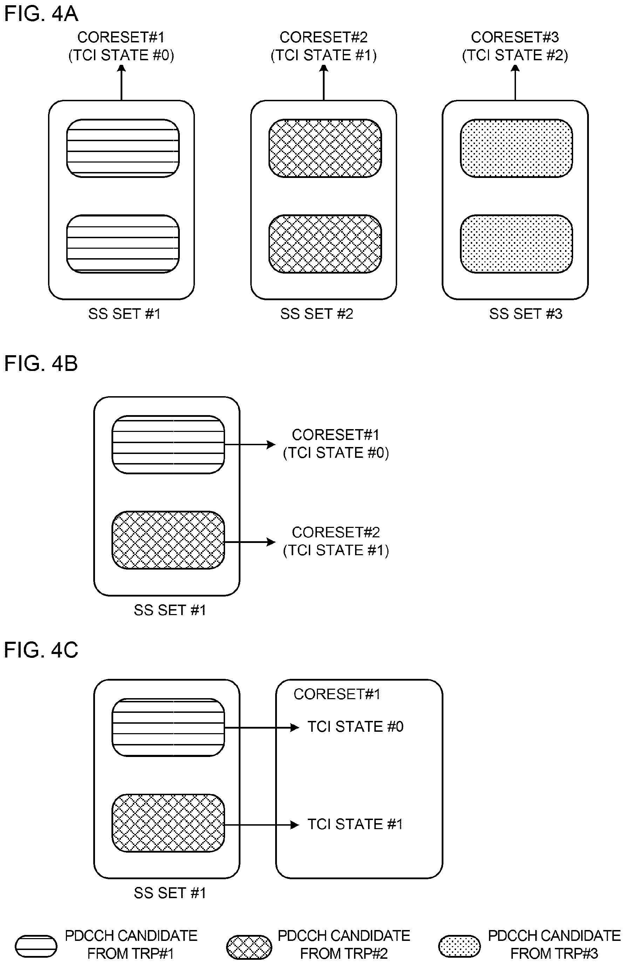

Figs. 4A to 4C are diagrams illustrating illustrative examples of relationships between a plurality of PDCCHs transmitted from different TRPs and SS sets. Even though Figs. 4A to 4C illustrate such SS sets including one or more PDCCH candidates (for example, one or more CCEs), but the present invention is not limited to these. The word "SS sets" may be replaced to read "search spaces" including one or more PDCCH candidates.

As illustrated in Fig. 4A, it may be so configured that PDCCHs from different TRPs (for example, TRP#1 to #3) are mapped to PDCCH candidates of different SS sets (for example, SS sets #1 to #3), respectively. Moreover, in Fig. 4A, the different SS sets (for example, SS sets #1 to #3) are associated with CORESETs (for example, CORESETs #1 to #3), respectively.

Moreover, even though Fig. 4A illustrates such a configuration that each CORESET is associated with one TCI state (for example, CORESETs #1 to #3 are associated with the TCI states #0 to #3, respectively), the present invention is not limited to this. It may be so configured that each CORESET is associated with a plurality of TCI states, one of which is activated.

In Fig. 4A, the user terminal may be so configured that the user terminal monitors the PDCCH candidates of the SS set #1, and controls the reception of the PDCCH from the TRP #1 on the basis of the TCI state associated with the CORESET #1. Similarly, the user terminal may be so configured that the user terminal regards the PDCCH candidates of the SS sets #2 and #3, and controls the reception of the PDCCHs from the TRPs #2 and #3 on the basis of the TCI state associated with the CORESETs #2 and 3, respectively.

As an alternative, as illustrated in Fig. 4B, it may be so configured that PDCCHs from different TRPs (for example, TRP#1 and #2) are mapped on different PDCCH candidates in the same SS set #1. Moreover, in Fig. 4B, the PDCCH candidates in the same SS set (or a set of one or more PDCCH candidates (PDCCH candidate set) are associated with CORESETs, respectively.

In Fig. 4B, it may be so configured that the single SS set #1 may be associated with a plurality of CORESETs (CORESETs #1 and #2, herein). Therefore, information indicating association between the PDCCH candidates in the SS set #1 (or the PDCCH candidate set) and the CORESETs may be configured in (provided to) the user terminal. The information may be, for example, such that, for each of the PDCCH candidates in the SS set (or the PDCCH candidate set), the information indicates an identifier (CORESET ID) of a CORESET corresponding to that PDCCH candidate.

Moreover, even though Fig. 4B illustrates such a configuration that each CORESET is associated with one TCI state (for example, CORESETs #1 and #2 are associated with the TCI states #0 and #1, respectively), the present invention is not limited to this. It may be so configured that each CORESET is associated with a plurality of TCI states, one of which is activated.

In Fig. 4B, the user terminal may be so configured that the user terminal monitors the PDCCH candidates associated with CORESETs#1 in the SS set #1, and controls the reception of the PDCCH from the TRP #1 on the basis of the TCI state associated with the CORESET #1. Similarly, the user terminal may be so configured that the user terminal monitors the PDCCH candidates associated with CORESETs#2 in the SS set #1, and controls the reception of the PDCCHs from the TRP #2 on the basis of the TCI state associated with the CORESET #2.

In Fig. 4C, as in Fig. 4B, it may be so configured that PDCCHs from different TRPs (for example, TRP#1 and #2) are mapped on different PDCCH candidates in the same SS set #1. Meanwhile, Fig. 4C is different from Fig. 4B in that each of the CORESETs is associated with a plurality of TCI states (or for each of the CORESETs, a plurality of TCI states are activated), but not with a single TCI state (or for each of the CORESETs, one TCI state is activated). In the following, differences between Fig. 4C and Fig. 4B will be mainly explained.

Moreover, in Fig. 4C, one CORESET is associated with a plurality of TCI states (for one CORESET, a plurality of TCI states is activated). For example, in Fig. 4C, the CORESET #1 associated with the SS set #1 is associated with the TCI states #0 and #1 (for the CORESET #1 associated with the SS set #1, the TCI states #0 and #1 are activated).

Moreover, in Fig. 4C, it may be so configured that the information indicating the association between the PDCCH candidates in the SS set #1 (or PDCCH candidate set) and the TCI states is configured in (provided to) in the user terminal. For example, the information may be such that, for each of the PDCCH candidates in the SS set (or the PDCCH candidate set), the information indicates a TCI state ID corresponding to that PDCCH candidate.

In Fig. 4C, the user terminal may be so configured that the user terminal monitors the PDCCH candidates of the SS set #1, and controls the reception of the PDCCH from the TRP #1 on the basis of the TCI state #0 associated with the PDCCH candidates. Similarly, the user terminal may be so configured that the user terminal monitors the PDCCH candidates in the SS set #1, and controls the reception of the PDCCHs from the TRP #2 on the basis of the TCI state #1 associated with the PDCCH.

As described above, the first aspect is configured such that the PDSCHs of different repetition indices k are scheduled with different PDCCHs, whereby a radio base station can flexibly control the scheduling of the PDSCHs with a change made per repetition.

### (Second Aspect)

In a second aspect, PDSCHs that will be transmitted respectively from a plurality of TRPs (or with a plurality of TCI states) with a repetition factor K are scheduled with the same single PDCCH (DCI). The user terminal is so configured to perform a receiving process (for example, demapping, demodulation, decoding, and/or the like) of the PDCCH on the assumption that the PDCCH will be transmitted from the same single TRP (or with the same single TCI state).

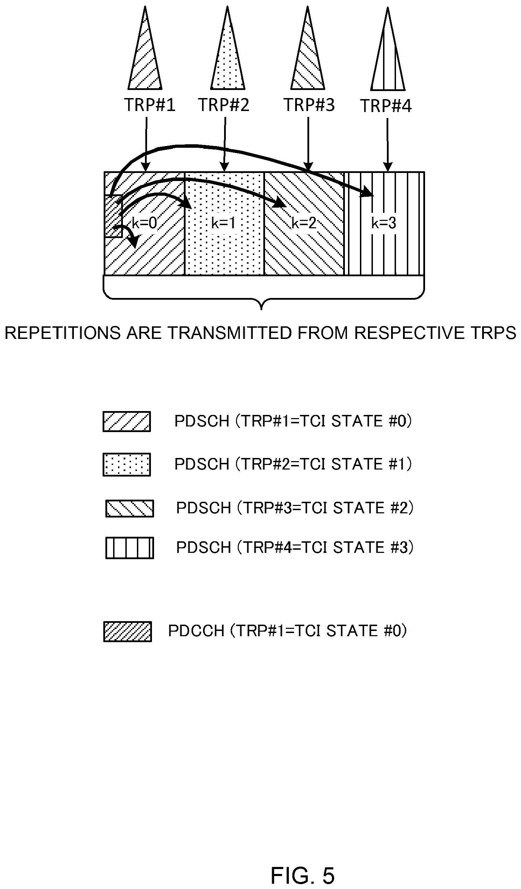

Fig. 5 is a diagram illustrating one example of PDCCH used for scheduling of PDSCH to be transmitted by repeated transmission from a plurality of TRPs according to a second aspect. In Fig. 5, it is assumed that repeated transmission of the PDSCHs is carried out as in Fig. 2. For Fig. 5, differences from Fig. 2 will be mainly explained.

As illustrated in Fig. 5, in case where the PDSCHs are transmitted from different TRPs per repetition, it may be so configured that the same single PDCCH for scheduling the PDSCHs is transmitted from the same single TRP. For example, in Fig. 5, the same single PDCCH for scheduling the PDSCHs of the repetition indices k = 0, 1, 2, and 3 will be transmitted from the TRP #1.

As illustrated in Fig. 5, the same single PDCCH may be transmitted from the same TRP from which the PDSCH of the first transmission (repetition index k = 0) will be transmitted. Moreover, the PDCCH of the same single PDCCH may be transmitted with the same TCI state with which the PDSCH of the first transmission (repetition index k = 0) will be transmitted, or with a TCI state different from the same TCI state. The user terminal may be so configured that, if the TCI state is identical with that of the PDSCH, the user terminal assumes that the PDCCH will be transmitted from the same TRP from which the PDSCHs are transmitted. On the other hand, the user terminal assumes that if the TCI state is different from that of the PDSCH, the PDCCH will be transmitted from a TRP different from that of the PDSCH.

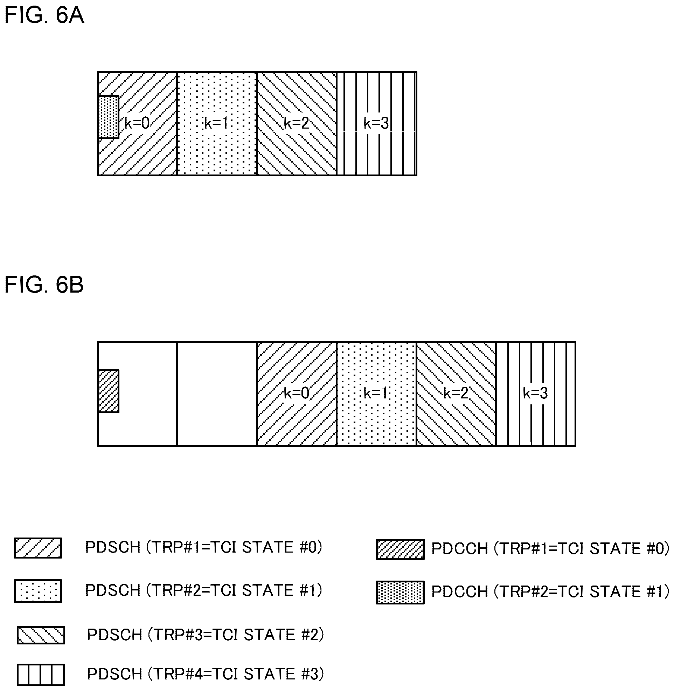

Figs. 6A and 6B are diagrams illustrating another example of PDCCH used for scheduling of PDSCH to be transmitted by repeated transmission from a plurality of TRPs according to a second aspect. Figs. 6A and 6B mainly explain differences from Fig. 5.

As illustrated in Fig. 6A, in case where the PDSCHs are transmitted from different TRPs per repetition, it may be so configured that the same single PDCCH for scheduling the PDSCH is transmitted from a TRP different from the same TCI state with which the PDSCH of the first transmission (repetition index k = 0) will be transmitted. Moreover, the same single PDCCH may be transmitted with a TCI state different from the TCI state with which the PDSCH of the first transmission will be transmitted, or with the TCI state with which the PDSCH of the first transmission will be transmitted.

For example, in Fig. 6A, the PDSCH of the repetition index k = 0 is transmitted from the TRP #1, whereas the same single PDCCH is transmitted from the TRP #2. The same single PDCCH may be transmitted from a TRP different from the TRP #1 to TRP #4 from which the PDSCHs will be transmitted.

Moreover, as illustrated in Fig. 6B, the same single PDCCH may be mapped on a resource different from the resources to which the PDSCHs are assigned, in terms of at least either the time domain or the frequency domain.

For example, as illustrated in Fig. 6B, a single PDCCH for scheduling the PDSCH of the repetition factor K may be such that the PDCCH is mapped on a time domain resource (which is a slot herein) prior to a time domain resource assigned to the PDSCH of the first transmission (repetition index k = 0), by a predetermined time (for example, 2 slots).

As described above, the user terminal may be so configured to control all of the reception of the PDCCH for scheduling the PDSCHs on the basis on a TCI state that is identical with or different from that of the PDSCHs of the first transmission. More specifically, the user terminal may be so configured that, if the TCI state is identical with that of the PDSCH of the first transmission, the user terminal assumes that the PDCCH will be transmitted from the same TRP from which the PDSCHs are transmitted. On the other hand, the user terminal assumes that if the TCI state is different from that of the PDSCH of the first transmission, the PDCCH will be transmitted from a TRP different from that of the PDSCH.

In the second aspect, it may be so configured that the user terminal detects monitors the PDCCH candidates in a predetermined search space (or SS set) and detects out the same single PDCCH therefrom. Moreover, it may be so configured that the search space is associated with one CORESET and one TCI state is activated for the one CORESET.

The user terminal may be so configured to control the reception of the same single PDCCH on the basis of the TCI state. More specifically, the user terminal may be so configured that the user terminal assumes that a DMRS port of the PDCCH for transmitting the same single PDCCH is in the QCL relationship with the DL-RS indicated by the TCI state.

As described above, with the second aspect, the PDSCHs of different repetition indices k are scheduled with the same single PDCCH, thereby making it possible to prevent an increase of overheads caused by PDCCH.

### (Third Aspect)

In a third aspect, as in the second aspect, PDSCHs that will be transmitted respectively from a plurality of TRPs (or with a plurality of TCI states) with a repetition factor K are scheduled with the same single PDCCH (DCI). On the other hand, the third aspect is different from the second aspect in that the same single PDCCH is transmitted by repeated transmission. In the third aspect, the difference from the second aspect will be mainly explained.

In the third aspect, each of a plurality of repetitions of the same single PDCCH may be transmitted from the same TRP or different TRPs. Moreover, each of the plurality of repetitions may be transmitted with the same TCI state or different TCI states.

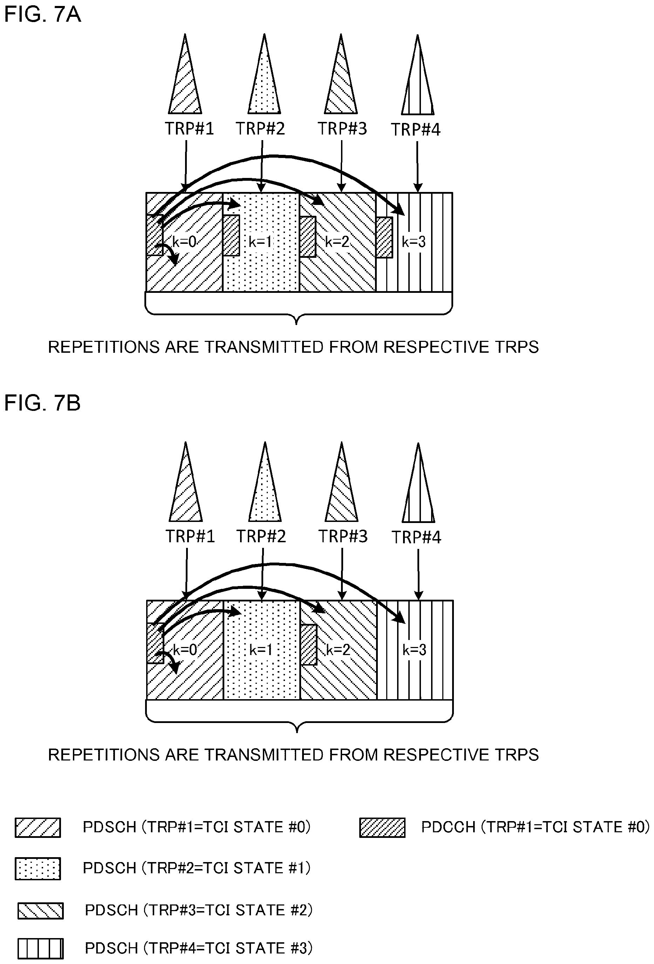

Figs. 7A and 7B are the other examples of PDCCH used for scheduling of PDSCH to be transmitted by repeated transmission from a plurality of TRPs according to a third aspect. In Figs. 7A and 7B, as in Fig. 5, the PDSCHs that will be transmitted respectively from the TRP #1 to TRP #4 with the repetition factor K = 4 are scheduled by the same single PDCCH.

Figs. 7A and 7B are different from Fig. 5 in that the same single PDCCH is transmitted by repeated transmission. In the following, the difference from Fig. 5 will be mainly explained.

As illustrated in Fig. 7A, it may be so configured that the same single PDCCH is transmitted repeatedly as many times as the number of the PDSCHs transmitted by the repeated transmission. For example, because the repetition factor K = 4 for the PDSCHs in Fig. 7A, it may be so configured that the same single PDCCHs is transmitted four times repeatedly.

Even though Fig. 7A illustrates a configuration in which the plurality of PDCCHs (four PDCCHs herein) each of which is transmitted with the same PDCCH is transmitted from the same TRP #1, but the plurality of PDCCHs may be transmitted from different TRPs. Moreover, even though Fig. 7A illustrates a configuration in which the plurality of PDCCHs are transmitted with the same TCI state #0, but the plurality of PDCCHs may be transmitted with different TCI states. The user terminal controls the reception of each of the plurality of PDCCHs on the basis of the TCI state of that PDCCH. The user terminal may be so configured that, in case where the TCI states are different from each other, the user terminal assumes that the plurality of PDCCHs will be transmitted from different TRPs. On the other hand, the user terminal may be so configured that, in case where the TCI states are identical with each other, the user terminal assumes that the plurality of PDCCHs will be transmitted from the same TRP.

Moreover, PDCCH candidates for the plurality of PDCCHs may be provided in different search spaces (SS sets) (for example, see Fig. 4A), or in the same search space (SS set) (for example, see Figs. 4B and 4C).

As explained for Fig. 4A, it may be so configured that each search space (SS set) is associated with a single CORESET, and a single CORESET is associated with the same single TCI state activated. The user terminal may be so configured that the user terminal monitors the PDCCH candidates in each search space (SS set), and controls the reception of the PDCCHs in the PDCCH candidates on the basis of the TCI state corresponding to the CORESET associated with that search space.

As an alternative, as explained for Fig. 4B, it may be so configured that a search space (SS set) is associated with a plurality of CORESETs, and each of the PDCCH candidates (or PDCCH set) in the search space (SS set) is associated with a CORESET among the plurality of CORESETs. Moreover, it may be so configured that the CORESETs are associated respectively with a single TCI state activated.

As an alternative, as explained in Fig. 4C, it may be so configured that the same search space (SS set) is associated with a single CORESET, the single CORESET is associated with a plurality of TCI states, and each of the PDCCH candidates (or PDCCH candidate set) in the search space (SS set) is associated with a TCI state among the plurality of TCI states.

In Fig. 7A, the user terminal may be so configured that, if decoding (reception) of any one of PDCCHs transmitted by the repeated transmission is successfully done, the user terminal discards the PDCCHs transmitted thereto by repeated transmission thereafter (stops the reception of PDCCHs thereafter transmitted thereto).

Fig. 7B is similar to Fig. 7A, except that the same single PDCCH is transmitted by repeated transmission by a smaller number of times than the PDSCH (two times herein).

The numbers of times of the repetition (repetition factor K) of the PDCCHs exemplified in Figs. 7A and 7B are merely for illustrative purpose, and the present invention is not limited to two-time or four-time repetitions. Moreover, the resources to which the PDCCHs are mapped are not limited to those illustrated in Figs. 7A and 7B as examples, and the PDCCHs may be provided on a resource that is, in terms of at least either the time domain or the frequency domain, different from the resources of the PDSCHs repeated with the repetition factor K (for example, a resource prior to the PDSCH by a predetermined time period) (For example, see Figs. 3C and 3D).

As described above, in the third aspect, the same single PDCCH for scheduling the PDSCHs of different repetition indices is transmitted repeatedly, thereby making it possible that, even if the user terminal fails to detect part of the repetitions of the PDCCH, the user terminal can appropriately control the reception of the PDSCHs on the basis of the following repetitions of the PDCCH. Moreover, once the decoding of the PDCCH is successfully done, the monitoring of the PDCCH in the following repetitions is stopped, thereby making it possible to prevent an increase of load of the monitoring processing on the user terminal.

### (Radio Communication System)

Now, the structure of a radio communication system according to the present embodiment will be described below. In this radio communication system, communication is performed using one or a combination of the radio communication methods according to the embodiments of the present disclosure.

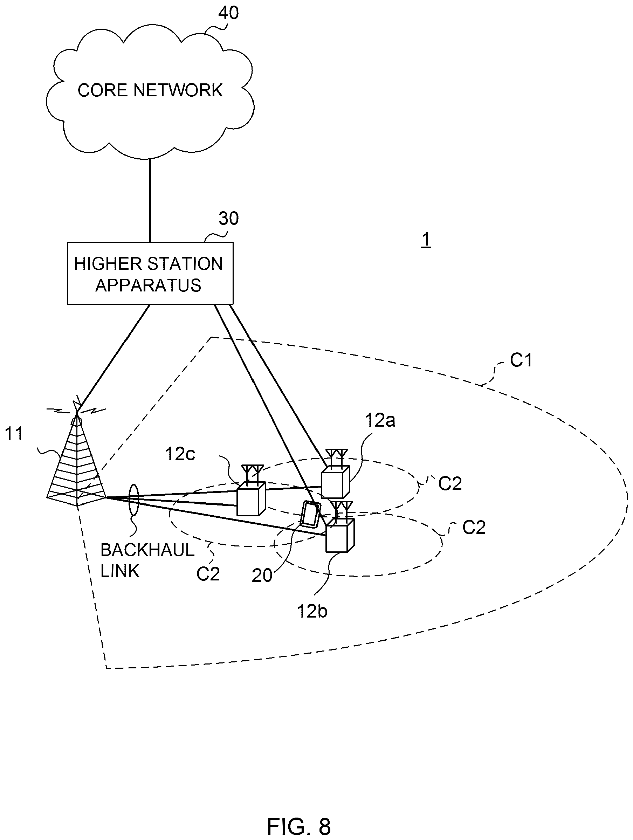

Fig. 8 is a diagram to show an example of a schematic configuration of the radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)", "LTE-A (LTE-Advanced)", "LTE-B (LTE-Beyond)", "SUPER 3G", "IMT-Advanced", "4G (4th generation mobile communication system)", "5G (5th generation mobile communication system)", "NR (New Radio)", "FRA (Future Radio Access)", "New-RAT (Radio Access Technology)", and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminal 20 are placed in the macro cell C1 and in each small cell C2. The arrangement, number and so on of cells and user terminal 20 are not limited to those illustrated in the drawings.

The user terminal 20 can connect with both the radio base station 11 and the radio base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the radio base station 11, communication can be carried out using a carrier of a relatively low frequency band (for example, 2 GHz) and a narrow bandwidth (referred to as an "existing carrier", a "legacy carrier" and so on). Meanwhile, between the user terminal 20 and the radio base stations 12, a carrier of a relatively high frequency band (for example, 3.5 GHz, 5 GHz, and so on) and a wide bandwidth may be used, or the same carrier as that used between the user terminal 20 and the radio base station 11 may be used. Note that the configuration of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and so on. For example, for a certain physical channel, when the subcarrier spacing differs and/or the numbers of OFDM symbols are different between the constituent OFDM symbols, this case may be described that they are different in numerology.

The radio base station 11 and the radio base station 12 (or between 2 radio base stations 12) may be connected by wire (for example, means in compliance with the common public radio interface (CPRI) such as optical fiber, an X2 interface, and so on) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", an "aggregate node", an "eNB (eNodeB)", a "transmission/reception point" and so on. Also, the radio base stations 12 are radio base stations having local coverages, and may be referred to as "small base stations", "micro base stations", "pico base stations", "femto base stations", "HeNBs (Home eNodeBs)", "RRHs (Remote Radio Heads)", "transmission/reception points" and so on. Hereinafter the radio base stations 11 and 12 will be collectively referred to as "radio base stations 10", unless specified otherwise.

The user terminal 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared Channel)), which is used by each user terminal 20 on a shared basis, a broadcast channel (PBCH (Physical Broadcast Channel)), downlink L1/L2 control channels and so on are used as downlink channels. User data, higher layer control information and SIBs (System Information Blocks) are transmitted in the PDSCH. Further, MIB (Master Information Block) is transmitted by PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on, is transmitted by the PDCCH.

DCI that schedules receipt of DL data may also be referred to as "DL assignment", and DCI that schedules transmission of UL data may also be referred to as "UL grant".

The number of OFDM symbols to use for the PDCCH is communicated by the PCFICH. HARQ (Hybrid Automatic Repeat reQuest) delivery acknowledgment information (also referred to as, for example, "retransmission control information", "HARQ-ACKs", "ACK/NACKs" and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information, and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user terminal specific reference signals (UE-specific Reference Signals)". Also, the reference signals to be communicated are by no means limited to these.

### <Radio Base Station>

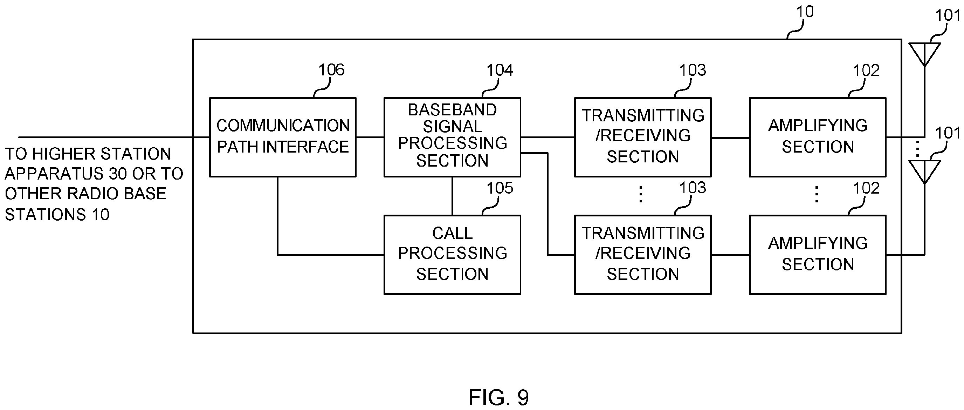

Fig. 9 is a diagram to show an example of an overall configuration of the radio base station according to the present embodiment. The radio base station 10 includes a plurality of transmitting/receiving antennas 101, amplifying sections 102 and transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be constituted as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving section 103 may further include an analog beamforming section that performs analog beamforming. The analog beamforming section may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 101 may be composed of an array antenna, for example.

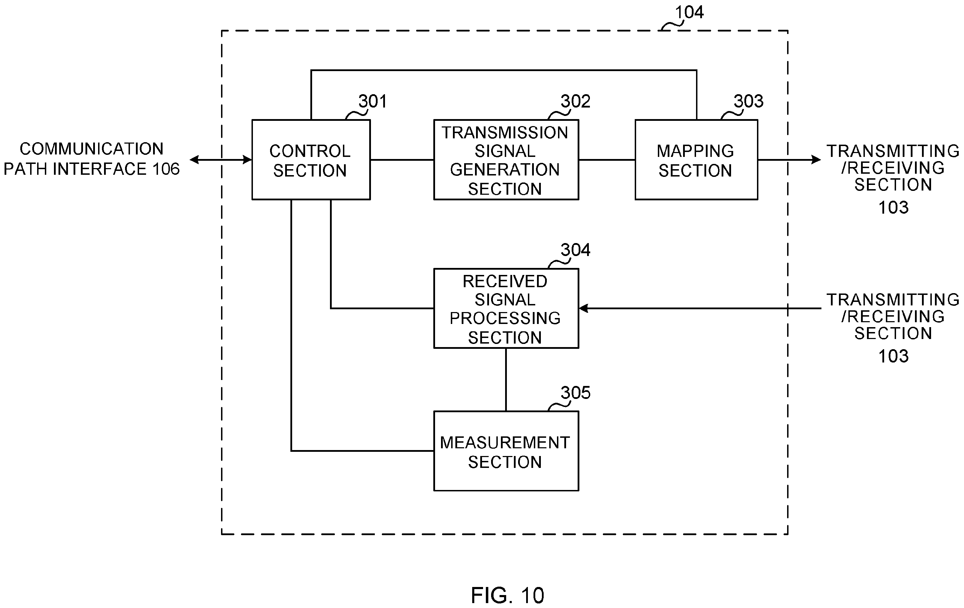

Fig. 10 is a diagram to show an example of a functional configuration of the radio base station according to the present embodiment. Note that, although this example will primarily show functional blocks that pertain to characteristic parts of the present embodiment, the radio base station 10 may be assumed to have other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals and so on, based on the results of deciding whether or not retransmission control is necessary for uplink data signals, and so on.

The control section 301 controls the scheduling of synchronization signals (for example, the PSS (Primary Synchronization Signal)/SSS (Secondary Synchronization Signal)), SSB, downlink reference signals (for example, the CRS, the CSI-RS, the DMRS, etc.) and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The control section 301 may perform control to form a transmission beam and/or a reception beam using a digital BF (for example, precoding) in the baseband signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on instructions from the control section 301. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user terminal 20.

The mapping section 303 maps the downlink signals generated in the transmission signal generation section 302 to predetermined radio resources based on instructions from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, etc.) that are transmitted from the user terminal 20. The received signal processing section 304 can be constituted by a signal processor, a signal processing circuit or signal processing apparatus that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio)), the signal strength (for example, RSSI (Received Signal Strength Indicator)), propagation path information (for example, CSI), and so on. The measurement results may be output to the control section 301.

Note that the transmitting/receiving sections 103 may transmit the downlink control information (DCI) (DL assignments or the like) for scheduling the downlink shared channel (for example, PDSCH).

Moreover, the transmitting/receiving sections 103 may be so configured that, in case the downlink shared channel is transmitted by repeated transmission, the PDSCH transmitted is for at least part of the repetitions. Moreover, the transmitting/receiving sections 103 may be so configured to transmit DCI for scheduling all the repetitions of the downlink shared channels. Moreover, the transmitting/receiving section 103 may be so configured to transmit the DCI for scheduling repeated transmission of the downlink shared channel performed with a change made per a predetermined number of repetitions.

Moreover, the control section 301 may be so configured to control the repeated transmission of the downlink shared channel. More specifically, the control section 301 may be so configured to control the transmission of the PDSCH, in which the PDSCH is transmitted from different transmission/reception points per a predetermined number of repetitions.

Moreover, the control section 301 may be so configured to control at least either generation or transmission of the DCI used for scheduling all of the repetitions of the downlink shared channel. Moreover, the control section 301 may be so configured to control at least either generation or transmission of the DCI used for scheduling the repetitions of the downlink shared channel transmitted with a change made per a predetermined number of times.

### <User terminal>

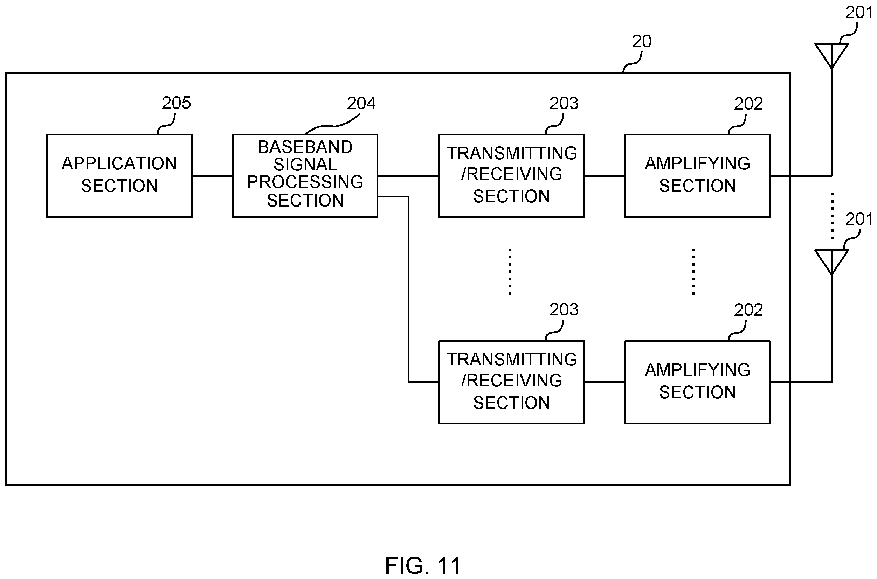

Fig. 11 is a diagram to show an example of an overall configuration of the user terminal according to the present embodiment. The user terminal 20 includes a plurality of transmitting/receiving antennas 201, amplifying sections 202 and transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be constituted as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 201 may be composed of an array antenna, for example.

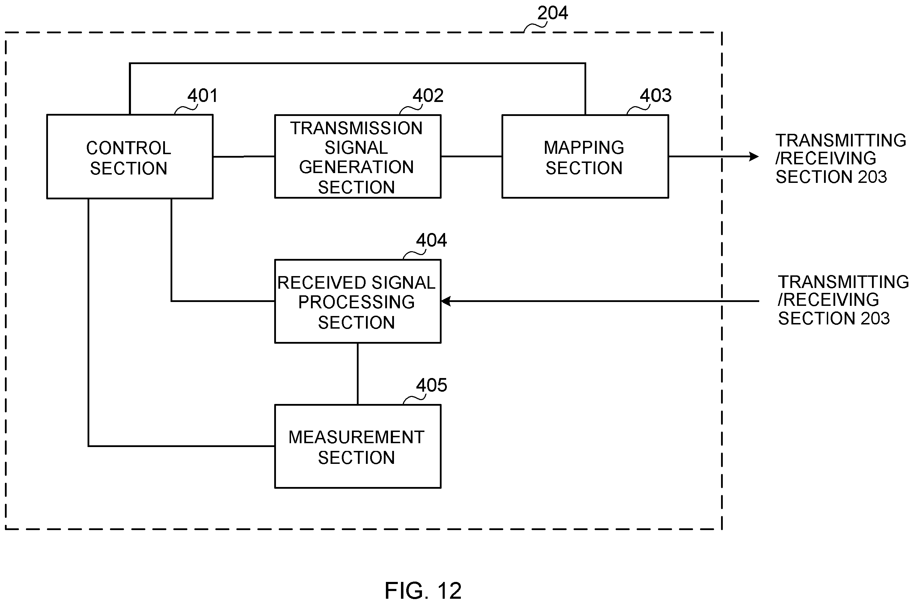

Fig. 12 is a diagram illustrating an example of a functional configuration of the user terminal according to the present embodiment. Note that, although this example will primarily show functional blocks that pertain to characteristic parts of the present embodiment, it may be assumed that the user terminal 20 have other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405 and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may perform control to form a transmission beam and/or a reception beam using a digital BF (for example, precoding) in the baseband signal processing section 204 and/or an analog BF (for example, phase rotation) in the transmitting/receiving section 203. The control section 401 may perform control to form the beams based on downlink propagation path information, uplink propagation path information and so on. These pieces of propagation path information may be acquired from the received signal processing section 404 and/or the measurement section 405.

Further, when the control section 401 acquires various information reported from the radio base station 10 from the received signal processing section 404, the control section 401 may update the parameter used for control based on the information.

The transmission signal generation section 402 generates uplink signals (uplink control signals, uplink data signals, uplink reference signals, etc.) based on instructions from the control section 401, and outputs these signals to the mapping section 403. The transmission signal generation section 402 can be constituted by a signal generator, a signal generating circuit or signal generation apparatus that can be described based on general understanding of the technical field to which the present disclosure pertains.

For example, the transmission signal generation section 402 generates uplink control signals such as delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is reported from the radio base station 10, the control section 401 instructs the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

Note that the transmitting/receiving sections 203 may receive the downlink control information (DCI) (DL assignments or the like) for scheduling the downlink shared channel (for example, PDSCH).

Moreover, the transmitting/receiving section 203 may be so configured that, in case where the downlink shared channel is transmitted by repeated transmission, the transmitting/receiving section 203 receives the downlink shared channel from different transmission/reception points per a predetermined number of repetitions. Moreover, the transmitting/receiving sections 203 may be so configured to receive DCI for scheduling all the repetitions of the downlink shared channels. Moreover, the transmitting/receiving section 203 may be so configured to receive the DCI for scheduling repeated transmission of the downlink shared channel performed with a change made per a predetermined number of repetitions.

Moreover, the control section 401 may be so configured that the control section 401 controls the reception of the DCI used for scheduling all of the repetitions of the PDSCHs. Moreover, the control section 401 may be so configured that the control section 401 controls the DCI used for scheduling the transmission of repetitions of the PDSCHs with a change made per a predetermined number of repetitions.

The control section 401 may be so configured that, on the basis of a transmission configuration indicator (TCI) state associated with a control resource set, the control section 401 controls the reception of the downlink control channel transmitted with a change made per the predetermined number of repetition, where the downlink control channel is provided in a search space set (also referred to as a set of one or more search spaces, or one or more search spaces) associated with that control resource set (for example, see Fig. 4A), where the TCI states are associated respectively with the control resource sets.

The control section 401 may control the reception of the downlink control channel with a change made per the predetermined number of repetitions on the basis of a transmission configuration indicator (TCI) associated with a control resource set, in which that downlink control channel is provided in a candidate resource associated with that control resource set in a search space set (for example, see Fig. 4B).

Further, a plurality of transmission configuration indicator (TCI) states may be associated with the same single control resource set, and the plurality of TCI states may be associated respectively with candidate resources in a search space set associated with the same single control resource set. In this case, the control section 401 may control the reception of the downlink control channel with a change made per the predetermined number of repetitions on the basis of a TCI state among the plurality of TCI states, in which the plurality of TCI states is associated respectively with the candidate resources, and the downlink control channel is provided in a candidate resource among the candidate resources, that candidate resource being associated with that TCI state (for example, see Fig. 4C).

Note that the downlink control channel of each of the predetermined number of repetitions may be transmitted from a transmission/reception point from which the downlink shared channel scheduled by that downlink control channel is transmitted or from a transmission/reception point different from the transmission/reception point from which the downlink shared channel scheduled by that downlink control channel is transmitted.

Further, the downlink control channel for scheduling all the repetitions may be transmitted by repeated transmission. In this case, once the control section 401 successfully decodes the downlink control channel, the control section 401 may discard the downlink control channel transmitted thereto by repetitions thereafter.

### (Hardware Configuration)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

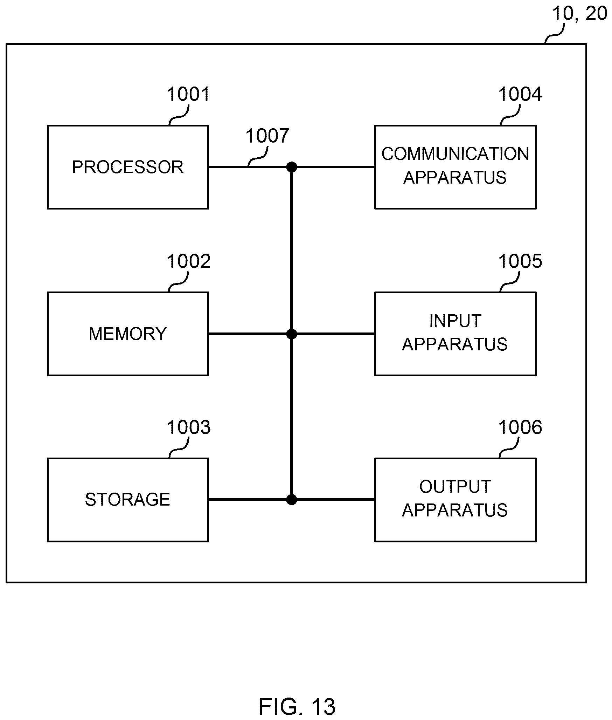

For example, the radio base station, user terminal, and so on according to embodiments of the present disclosure may function as a computer that executes the processes of the radio communication method of the present disclosure. Fig. 13 is a diagram illustrating an example of a hardware configuration of the radio base station and the user terminal according to one embodiment. Physically, the above-described radio base stations 10 and user terminal 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit", "device", "unit", and so on. Note that the hardware configuration of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations described in the above-described embodiments may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (main storage device)" and so on. The memory 1002 can store a program (program code), a software module, and the like, which are executable for implementing the radio communication method according to the embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an RS, and may be referred to as a pilot, a pilot signal, and so on, depending on which standard applies. Furthermore, a "component carrier (CC)" may be referred to as a "cell", a "frequency carrier", a "carrier frequency" and so on.

A radio frame may be comprised of one or more periods (frames) in the time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) that is not dependent on numerology.

Here, the numerology can be a communication parameter applied to at least one of transmission and reception of a certain signal or channel. The numerology can indicate, in one example, at least one of subcarrier spacing (SCS), bandwidth, symbol length, cyclic prefix length, subframe length, transmission time interval (TTI), the number of symbols per TTI, the radio frame configuration, particular filtering processing performed by the transceiver in frequency domains, particular windowing processing performed by a transceiver in time domains, and so on.

A slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of mini slots. Each mini slot may be comprised of one or more symbols in the time domain. Also, a mini slot may be referred to as a "subslot". Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini-slot may be referred to as "PDSCH (PUSCH) mapping type B".

A radio frame, a subframe, a slot, a mini slot and a symbol all represent the time unit in signal communication. A radio frame, a subframe, a slot, a mini slot and a symbol may be each called by other applicable names. Moreover, the time units such as frames, subframes, slots, mini-slots, and symbols herein are used interchangeably.

For example, one subframe may be referred to as a "transmission time interval (TTI)", or a plurality of consecutive subframes may be referred to as a "TTI", or one slot or mini-slot may be referred to as a "TTI". That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. When TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB can be the same regardless of the numerology, and in one example, it can be 12. The number of subcarriers included in the RB can be determined on the basis of numerology.

Also, an RB may include one or more symbols in the time domain, and may be one slot, one mini slot, one subframe or one TTI in length. One TTI, one subframe, or the like can be constituted as one or a plurality of resource blocks.

Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be comprised of one or more resource elements (REs). For example, one RE may be a radio resource field of one subcarrier and one symbol.

A bandwidth part (BWP) (also be referred to as a partial bandwidth) can represent a subset of consecutive common resource blocks (RBs) for a certain numerology in a certain carrier. Here, the common RB can be specified by the index of the RB using the common reference point of the carrier as a reference. The PRB can be defined in a certain BWP and be numbered within the BWP.

The BWP can include a BWP for UL (UL BWP) and a BWP for DL (DL BWP). For the UE, one or a plurality of BWPs can be configured in one carrier.

At least one of the configured BWPs can be active, and the UE may not necessarily assume that it will transmit and receive predetermined signals/channels outside the active BWP. Moreover, terms "cell", "carrier", and the like are herein used interchangeably with "BWP".

Note that the structures of radio frames, subframes, slots, mini slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to predetermined values, or may be represented using other applicable information. For example, a radio resource may be specified by a predetermined index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as RRC messages, and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

The terms such as "precoding", "precoder", "weight (precoding weight)", "transmission power", "phase rotation", "antenna port", "layer", "number of layers", "rank", "beam", "beam width", "beam angle", "antenna", "antenna element", and "panel" can be herein used interchangeably.

The terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be herein used interchangeably. The base station may be called a term such as a macro cell, a small cell, a femto cell, a pico cell, and the like.

The base station is capable of covering one or a plurality of (e.g., three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user equipment", "user equipment (UE)", "terminal", etc. may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the radio base stations in the present disclosure may be interpreted as user terminal. For example, each aspect/embodiment of the present disclosure may be applied to a configuration in which communication between a radio base station and a user terminal is replaced by communication among a plurality of user terminal (which may be referred to as, for example, D2D (Device-to-Device), V2X (Vehicle-to-Everything) and so on). In this case, the user terminal 20 may have the functions of the radio base stations 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user terminal in the present disclosure may be interpreted as radio base stations. In this case, the radio base stations 10 may have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these. Further, a plurality of systems may be combined and applied (for example, a combination of LTE or LTE-A and 5G) .

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as "determining" judging, calculating, computing, processing, deriving, investigating, looking up (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering", and so on.

The term "maximum transmission power" described in the present disclosure may mean the maximum value of transmission power, the nominal UE maximum transmit power, or the rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other". Moreover, this term can mean that "A and B are different from C". The terms such as "separate" or "coupled" can be construed similarly as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. A user terminal, comprising:
a receiving section that receives a downlink shared channel transmitted from different transmission/reception points per a predetermined number of repetitions; and
a control section that controls reception of a downlink control channel for scheduling the downlink shared channel per the predetermined number of repetitions or a downlink control channel for scheduling all of the repetitions of the downlink shared channel.

2. The user terminal according to claim 1, wherein the control section controls the reception of the downlink control channel per the predetermined number of repetitions on the basis of a transmission configuration indicator (TCI) state associated with a control resource set, wherein that downlink control channel is provided in a search space set associated with that control resource set.

3. The user terminal according to claim 1, wherein the control section controls the reception of the downlink control channel per the predetermined number of repetitions on the basis of a transmission configuration indicator (TCI) state associated with a control resource set, wherein that downlink control channel is provided in a candidate resource associated with that control resource set in a search space set.

4. The user terminal according to claim 1, wherein a plurality of transmission configuration indicator (TCI) states is associated with the same single control resource set, and the plurality of TCI states is associated respectively with candidate resources in a search space set associated with the same single control resource set,
the control section controls the reception of the downlink control channel per the predetermined number of repetitions on the basis of per the plurality of TCI states, and the plurality of TCI states is associated respectively with the candidate resources, and the downlink control channel is provided in a candidate resource among the candidate resources.

5. The user terminal according to any one of claims 1 to 4, wherein the downlink control channel of per the predetermined number of repetition is transmitted from a transmission/reception point from which the downlink shared channel scheduled by that downlink control channel is transmitted or from a transmission/reception point different from the transmission/reception point from which the downlink shared channel scheduled by that downlink control channel is transmitted.

6. The user terminal according to claim 1, wherein the downlink control channel for scheduling all of the repetitions is transmitted by repeated transmission, and
once the control section successfully decodes the downlink control channel, the control section discards the downlink control channel transmitted thereto by repetitions thereafter.
